# FASCICULE DE BREVET EUROPEEN

(11) **EP 2 589 185 B1**
(45) Date de publication et mention de la délivrance du brevet: **04.01.2017**
(21) Numéro de dépôt: 11738491.7
(22) Date de dépôt: 30.06.2011
(51) Int. Cl.: H04L 12/28

(54) **SUPERVISION ÉNERGÉTIQUE D'UN LOCAL**
STROMÜBERWACHUNG EINES RAUMS
ENERGY SUPERVISION OF A ROOM

(30) Priorité: 01.07.2010 FR 1055330
(43) Date de publication de la demande: 08.05.2013
(73) Titulaire: Somfy SAS, 74300 Cluses (FR)
(72) Inventeur: CLABAUT, Muriel, F-74440 Taninges (FR); GREHANT, Bernard, F-74300 Nancy-sur-cluses (FR)
(74) Mandataire: Bugnion Genève
(86) Numéro de dépôt international: PCT/IB2011/052902
(87) Numéro de publication internationale: WO 2012/001658

(56) Documents cités:
- WO-A1-00/39506
- US-A1- 2007 233 285
- SAJAL K DAS ET AL: "THE ROLE OF PREDICTION ALGORITHMS IN THE MAVHOME SMART HOME ARCHITECTURE", IEEE WIRELESS COMMUNICATIONS, IEEE SERVICE CENTER, PISCATAWAY, NJ, US, vol. 9, no. 6, 1 décembre 2002 (2002-12-01), pages 77-84, XP011093895, ISSN: 1536-1284, DOI: DOI:10.1109/MWC.2002.1160085
- Cook, D.J.; Youngblood, M.; Heierman, E.O., III; Gopalratnam, K.; Rao, S.; Litvin, A.; Khawaja, F.: "MavHome: an agent-based smart home", Pervasive Computing and Communications, 2003. (PerCom 2003). Proceedings of the First IEEE International Conference on, 8 avril 2003 (2003-04-08), pages 1-4, XP002618689, DOI: 10.1109/PERCOM.2003.1192783 ISBN: 0-7695-1893-1 Extrait de l'Internet: URL:http://ieeexplore.ieee.org/stamp/stamp .jsp?tp=&arnumber=1192783 [extrait le 2011-01-26]
- YOUNGBLOOD M ET AL: "Seamlessly Engineering a Smart Environment", SYSTEMS, MAN AND CYBERNETICS, 2005 IEEE INTERNATIONAL CONFERENCE ON, IEEE, PISCATAWAY, NJ, USA, vol. 1, 10 octobre 2005 (2005-10-10), pages 548-553, XP010873882, DOI: DOI:10.1109/ICSMC.2005.1571203 ISBN: 978-0-7803-9298-4

## Description

L'invention concerne le domaine de l'optimisation de la dépense énergétique dans un local, quand celui-ci comprend au moins un équipement domotique de type ventilation, chauffage ou climatisation, ou protection solaire.

Le brevet EP 1 383 982 décrit un procédé de contrôle automatisé du niveau d'éclairage naturel et/ou d'énergie calorifique par gains solaires et/ou de la qualité de l'air par action sur une des ouvertures extérieures et/ou sur un moyen d'occultation, à l'aide d'un capteur de présence. Le brevet DE 40 23 673 décrit également une activation en fonction de la présence des occupants du local.

Le brevet US 5,259,553 décrit un système de contrôle de l'atmosphère intérieure d'un local muni de nombreux capteurs caractérisant la température et la qualité de l'air, l'éclairement, la température des parois, le nombre d'occupants et leur mouvement, la vitesse du vent, etc. en vue d'agir sur des actionneurs, par comparaison des valeurs de chaque capteur à des données préenregistrées.

Les brevets US 6,161,714 et US 6,398,118 décrivent également un système d'air conditionné (HVAC) dans lequel l'admission d'air extérieur est commandée par la mesure de concentration en dioxyde de carbone. Dans le premier cas, l'enthalpie de l'air extérieur est la variable de commande principale. Dans le deuxième cas, la concentration en CO₂ est comparée à plusieurs seuils.

Le brevet US 5,613,369 s'applique à une unité indépendante d'air conditionné (comme une unité disposée sur le plafond) pour laquelle l'algorithme de contrôle utilise comme variables l'écart entre température mesurée et température de consigne, et la variation de cet écart. L'algorithme peut être de type PID, à logique floue, ou composé d'un ou plusieurs algorithmes génétiques.

Le brevet US 6,699,120 décrit également un procédé d'optimisation, par logique floue, du contrôle d'ouvrants motorisés à l'aide de fonctions de confort prenant en compte la température intérieure, la teneur en CO₂ ou en humidité.

Ainsi, dans une chambre d'hôtel, tant que la chambre n'est pas occupée par un nouvel utilisateur ou en absence de celui-ci, les lumières sont éteintes et la climatisation est réduite, afin d'économiser l'énergie. De nombreux documents de l'art antérieur, comme les brevets US 4,319,712, US 4,223,301 ou US 5,620,137 décrivent également cette situation.

Le document de SAJAL K DAS ET AL, intitulé "THE ROLE OF PREDICTION ALGORITHMS IN THE MAVHOME SMART HOME ARCHITECTURE", décrit le rôle d'algorithmes prédictifs dans le cadre d'une installation domotique.

Le document de Cook, D.J., Youngblood, M., Heierman, E.O., Gopalratnam, K., Rao, S., Litvin, A. et Khawaja, F., intitulé "MavHome: an agent-based smart home", décrit le système MavHome, une architecture pour le contrôle automatisé de locaux.

Le document WO 00/39506 décrit une ventilation naturelle contrôlée d'une ou plusieurs zones de ventilation dans un bâtiment qui est effectuée par ajustement des dispositifs de ventilation passive, par exemple des fenêtres, en fonction d'une stratégie de contrôle comprenant l'estimation répétée périodiquement d'une demande de ventilation d'une zone à partir d'un paramètre physique de la zone, un valeur de consigne de la température intérieure de la zone et les températures intérieures et extérieures réelles, correction de la demande estimée en fonction des variables supplémentaires de climat intérieur pour déterminer un facteur d'ajustement pour chaque dispositif de ventilation, correction individuelle des facteurs d'ajustement pour les différents appareils de ventilation en fonction de variables climatiques extérieures supplémentaires et / ou un ajustement possible actionné de l'utilisateur d'un dispositif de ventilation, et la fourniture des facteurs d'ajustement corrigées individuellement pour les unités de l'opérateur pour les dispositifs de ventilation pour l'ajustement de l'alimentation en air de la zone par l'ouverture et la fermeture desdits dispositifs.

Les systèmes et procédés de l'art antérieur ne permettent toutefois pas de réaliser des gains énergétiques supplémentaires sur une installation existante.

De plus, la commande d'équipements à partir d'une simple information de présence se heurte aux défauts connus des capteurs de présence : un capteur de présence est généralement sensible au mouvement. Si le local est un espace de bureaux dont les occupants sont relativement immobiles devant le poste de travail, alors la détection de présence ne fonctionne pas ou mal avec ces simples détecteurs.

Enfin, lorsqu'il s'agit de locaux familiaux ou tertiaires, le nombre d'occupants du local varie souvent de manière régulière au cours de la journée et de la semaine. Par exemple, une salle de réunion est occupée régulièrement le lundi après-midi pour une réunion de service regroupant un nombre de participants beaucoup plus important que les réunions habituelles : il est donc important que l'air ait été renouvelé avant l'arrivée des participants. C'est par contre gaspiller l'énergie que de procéder à un renouvellement d'air important après la réunion s'il s'avère que la salle de réunion n'est pas utilisée jusqu'au lendemain et que la ventilation normale du local suffit à renouveler le volume d'air.

Un même type d'exemple peut se rencontrer dans le cadre d'une habitation : préparation des repas, utilisation des chambres etc. obéissent à des schémas répétitifs et des besoins en ventilation personnalisés au cours de la semaine, avec modifications éventuelles le week-end.

Dans un autre domaine, artisanal, voire industriel, un atelier de carrosserie et peinture automobile présente également une utilisation marquée par un cycle journalier ou hebdomadaire particulier, par exemple pour bénéficier d'un tarif d'heures creuses pour l'utilisation des cabines de séchage.

Il est cependant fastidieux de devoir paramétrer toutes ces informations, que seul l'utilisateur du local est à même de connaître et/ou de prévoir, et qui, de plus, sont susceptibles d'évolution sur des périodes longues (saisonnalité, embauche de nouveaux collaborateurs etc.).

L'invention remédie aux inconvénients et/ou lacunes de l'art antérieur. Selon l'invention, le procédé de commande d'au moins un équipement domotique, relié à un moyen de contrôle et à une unité de commande distincte du moyen de contrôle par un réseau domotique sur lequel sont adressés des ordres de commande vers l'équipement domotique, à l'aide d'un dispositif de supervision relié au réseau domotique, où ledit dispositif de supervision
i. capte des ordres émis par le moyen de contrôle vers l'au moins un équipement domotique,
ii. capte des ordres émis par l'unité de commande vers l'au moins un équipement domotique, et
iii. émet des ordres de commande vers l'au moins un équipement domotique, ledit procédé comprenant :
   - une étape (S11) de détection, par le dispositif de supervision, d'un ordre d'activation croissante de l'équipement domotique émis par le moyen de contrôle,
   - une étape (S12) d'enregistrement, par le dispositif de supervision, d'une caractéristique temporelle relative à l'ordre d'activation croissante,
   - une étape (S13) de prévision, par le dispositif de supervision, de l'occurrence d'un prochain ordre d'activation croissante, à partir des caractéristiques temporelles enregistrées.

Selon l'invention, l'équipement domotique peut être un moyen de ventilation, et/ou un moyen de chauffage, et/ou un moyen de climatisation, et/ou un moyen de protection solaire.

Selon l'invention, le procédé de commande peut comprendre une étape (S15) d'émission, par le dispositif de supervision, d'un ordre d'activation croissante de l'équipement, avant l'occurrence d'un prochain ordre d'activation croissante, lorsque ce prochain ordre d'activation a lieu dans une période d'occupation du local et/ou dans une période de forte tarification énergétique.

Selon l'invention, le procédé de commande peut comprendre une étape (S24) d'émission, par le dispositif de supervision, d'un ordre d'activation décroissante de l'équipement domotique, après la détection d'un ordre d'activation croissante émis par le moyen de contrôle, lorsque le moyen de contrôle est un contrôleur existant et lorsque cet ordre d'activation croissante a lieu avant une période d'inoccupation du local et/ou avant une période de faible tarification énergétique.

Selon l'invention, le procédé de commande peut comprendre une étape (S25) d'inhibition dont la mise en oeuvre est dépendante de l'écart d'un paramètre de confort du local avec un premier seuil (TH1).

Selon l'invention, le paramètre de confort peut être une mesure de qualité de l'air, l'étape d'inhibition ayant alors lieu quand la mesure de qualité de l'air dépasse le premier seuil et si l'équipement domotique est un moyen de ventilation.

Selon l'invention, le paramètre de confort peut être une mesure de température intérieure, l'étape d'inhibition ayant alors lieu quand la mesure de température intérieure dépasse le premier seuil et si l'équipement domotique est un moyen de climatisation.

Selon l'invention, le paramètre de confort peut être une mesure de température intérieure, l'étape d'inhibition ayant alors lieu quand la mesure de température intérieure passe en dessous du premier seuil et si l'équipement domotique est un moyen de chauffage.

Selon l'invention, le procédé de commande peut comprendre une étape d'évolution du premier seuil dont la mise en oeuvre est dépendante d'une détection d'une commande émise par un moyen de contrôle constitué par un moyen de commande manuel de l'équipement domotique.

Selon l'invention, le dispositif de supervision d'au moins un équipement domotique d'un local et comprenant au moins un premier capteur mesurant une qualité de l'air et disposé dans le local, une horloge-calendrier fournissant une heure et date courante, une mémoire apte à enregistrer et à dater des événements d'évolution spécifique de la mesure de qualité de l'air, comprend en outre des moyens matériels et logiciels mettant en oeuvre le procédé tel que décrit ci-dessus.

Selon l'invention, les moyens logiciels peuvent comprenndre au moins un premier programme (PRG1) d'exécution d'une loi de commande comprenant des paramètres et un deuxième programme (PRG2) de type évolutionnaire pour la détermination desdits paramètres et leur optimisation au cours du fonctionnement du dispositif de supervision.

L'invention sera mieux comprise par l'homme du métier grâce à la description détaillée de différentes variantes du mode d'exécution en relation avec les dessins accompagnants, dans lesquels :
La figure 1 représente une installation munie d'un dispositif de supervision utilisant le procédé de commande selon un premier mode de réalisation de l'invention.
La figure 2 représente un premier exemple d'évolution de taux de dioxyde de carbone avec application du procédé de commande.
La figure 3 représente un mode d'exécution du procédé de commande.
La figure 4 représente partiellement une première variante du mode d'exécution.
La figure 5 représente partiellement une deuxième variante du mode d'exécution.
La figure 6 représente un deuxième exemple d'évolution de taux de dioxyde de carbone avec application d'un procédé de détection de présence constituant une troisième variante du mode d'exécution.
La figure 7 représente sous forme d'une étape unique le procédé de détection de présence.

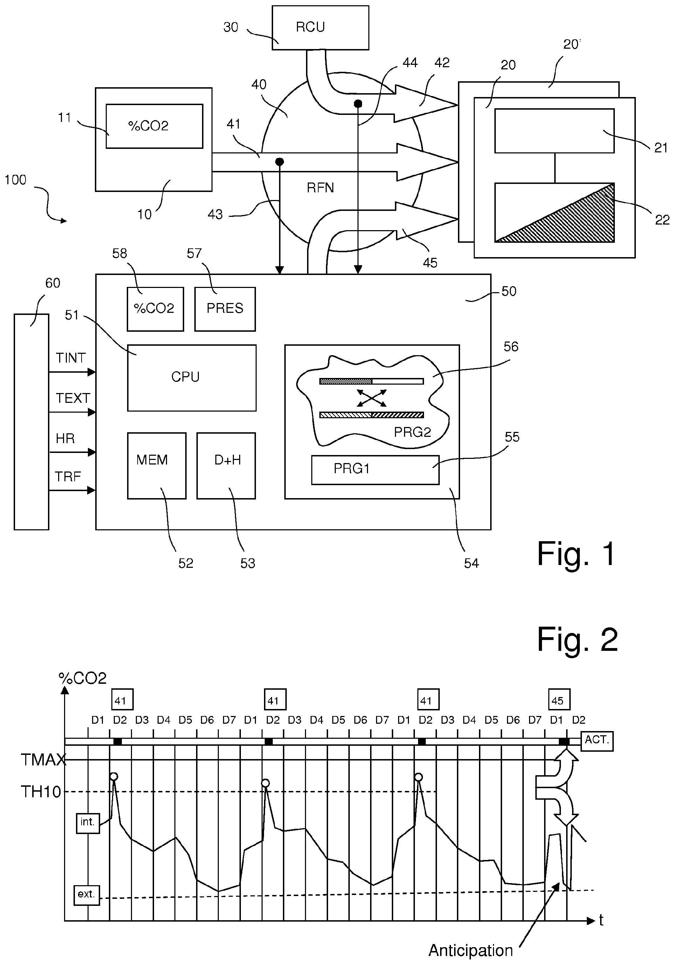

La figure 1 représente, dans un local non représenté, une installation 100 munie d'un dispositif de supervision 50 utilisant le procédé de commande selon l'invention.

L'invention est décrite dans le cas d'équipements de ventilation naturelle mais s'applique de même à des équipements domotiques de type chauffage, climatisation, protection solaire, quel que soit leur nombre ou leurs combinaisons.

L'installation comprend un contrôleur existant 10, muni d'un capteur de qualité de l'air 11, par exemple un capteur de concentration en dioxyde de carbone.

L'installation comprend un ou plusieurs équipements domotiques, dans le cas présent des moyens motorisés de ventilation naturelle. Un premier moyen motorisé de ventilation naturelle 30 comprend un actionneur 21 raccordé à ouvrant mobile 22 ou trappe de ventilation. Ce moyen de ventilation naturelle est normalement disposé en périphérie du local, par exemple au niveau d'une baie vitrée dont il constitue un des éléments. Alternativement, il est disposé en extrémité d'un conduit de ventilation (d'extraction d'air, d'apport d'air), dont il contrôle l'ouverture. L'installation comprend un deuxième moyen motorisé de ventilation naturelle 20', par exemple analogue au premier moyen 20 et disposé ailleurs dans le local. Alternativement les moyens 20 et 20' varient en nature et/ou dimensions. L'installation peut ne comprendre qu'un seul moyen motorisé de ventilation naturelle ou, au contraire, plus de deux moyens.

L'installation peut également comprendre des moyens de ventilation mécanique contrôlée comprenant par exemple un moteur à puissance variable (par exemple avec deux vitesses de rotation) et/ou comprenant des moyens réglables d'admission d'air extérieur. Ces moyens réglables d'admission d'air extérieur sont assimilables à des moyens motorisés de ventilation naturelle.

Une unité de commande distante 30 permet la commande des moyens motorisés de ventilation naturelle par un utilisateur, par exemple à l'aide d'une ou plusieurs touches d'un clavier.

La communication entre le contrôleur existant et les équipements se fait par l'intermédiaire d'un réseau domotique radiofréquences 40. Les ordres émis par le contrôleur existant vers les équipements sont référencés 41 et les ordres émis par l'unité de commande distante vers les équipements sont référencés 42. De manière simple, il s'agit d'ordres d'activation totale ou d'ordres d'arrêt total. Il peut aussi s'agir d'ordres d'activation croissante (déplacement positif d'un point de consigne) ou d'ordres d'activation décroissante (déplacement négatif d'un point de consigne). Par la suite, les deux premiers cas sont considérés comme des cas particuliers d'activation croissante et d'activation décroissante.

L'installation comprend un dispositif de supervision 50 selon l'invention, qui peut être installé au moment de la réalisation de l'ensemble de l'installation mais aussi plus tardivement, en vue d'améliorer la performance énergétique du local.

Il comprend une unité de traitement 51, telle qu'un microprocesseur, une mémoire de données 52, une horloge calendrier 53 et des moyens logiciels 54 incluant un ou plusieurs algorithmes de type classique 55 et, préférentiellement, un ou plusieurs algorithmes de type évolutionnaire 56, représentés symboliquement par un croisement de gènes.

Le dispositif de supervision est raccordé au réseau domotique 40. Le dispositif de supervision est de plus raccordé à un moyen d'information 60 apte à délivrer des informations de mesure de paramètres internes au local ou externes au local. Ces informations de mesure sont par exemple une température intérieure TINT, une température extérieure TEXT, un taux d'humidité relative HR. Le moyen d'information délivre en particulier des données de tarification TRF. Ces informations sont issues de capteurs particuliers et/ou d'un serveur. Les capteurs particuliers et/ou le serveur peuvent communiquer avec le dispositif de supervision de manière séparée ou, préférentiellement, à l'aide du réseau domotique RFN.

Le dispositif de supervision comprend un capteur de présence 57 apte à délivrer une information sur l'occupation du local, ainsi qu'un capteur de confort 58 apte à mesurer un paramètre de confort dans le local, ici apte à mesurer un paramètre de qualité de l'air. La qualité de l'air peut s'exprimer par une concentration dans l'air d'un gaz particulier ou d'un ensemble de gaz ou de composés organiques volatils. Par exemple le capteur de qualité de l'air peut être un simple capteur de dioxyde de carbone mesurant un taux de dioxyde de carbone %CO₂, comme il sera décrit par la suite. Le capteur de qualité de l'air peut également être apte à fournir une mesure combinée de plusieurs concentrations de plusieurs gaz et/ou composés organiques volatils, cette mesure combinée résultant par exemple d'une somme pondérée de mesures relatives à chaque gaz et/ou composé organique volatil, fournies par des capteurs élémentaires du capteur de qualité de l'air.

Le dispositif de supervision est apte à écouter le réseau domotique, en particulier apte à capter des ordres émis par le contrôleur existant vers les équipements, comme représenté par une première flèche 43, et apte à capter des ordres émis par l'unité de commande à distance vers les équipements, comme représenté par une deuxième flèche 44. Le dispositif de supervision est également apte à émettre des ordres de commande 45 vers les équipements.

Alternativement, le contrôleur existant est intégré à un équipement et la communication d'ordres entre le contrôleur existant et cet équipement n'utilise pas le réseau domotique. Dans ce cas, la première flèche 43 représente un branchement filaire réalisé sur un circuit de commande ou de puissance interne à l'équipement. Il peut s'agir également d'une liaison de tout type avec un capteur de courant disposé en amont de l'équipement sur un réseau électrique alimentant l'équipement, dans le cas où le courant alimentant l'équipement est représentatif de l'exécution des ordres de commande envoyés vers cet équipement.

La figure 2 représente un exemple simplifié d'évolution du taux %CO2 de dioxyde de carbone dans le local quand il y a application du procédé de commande selon l'invention. Ce taux évolue au cours du temps t. Les jours de la semaine sont représentés du lundi D1 au dimanche D7. Le local est de type professionnel.

L'interprétation de ce diagramme montre que, si l'air extérieur présente un taux sensiblement constant (comme représenté par la droite en trait pointillé), les concentrations élevées sont le résultat de l'usage du local. Par exemple, le taux de dioxyde de carbone diminue sensiblement les samedis et dimanches du fait de la non-occupation du local pendant la fin de semaine et du renouvellement normal de l'air. Au contraire, le taux remonte chaque semaine dès le lundi matin.

La forte croissance du mardi matin (D2) montre qu'a lieu régulièrement dans le local une réunion regroupant beaucoup plus de personnes qu'en moyenne. Une ligne d'activation ACT représente, sous forme de rectangles noirs, les périodes d'activation des moyens motorisés de ventilation naturelle. Ceux-ci sont activés trois fois par le contrôleur existant, probablement parce qu'il constate le dépassement d'un seuil interne TH10. L'invention ne nécessite pas de connaître et/ou de comprendre le fonctionnement d'un contrôleur existant.

L'activation des moyens motorisés de ventilation naturelle fait redescendre rapidement le taux de dioxyde de carbone, mais peut créer un désagrément du fait du flux d'air résultant.

De plus un important apport d'air extérieur peut être préjudiciable sur le plan énergétique, parce qu'il faudra dépenser, à une heure de pointe tarifaire, une énergie coûteuse pour le réchauffer ou pour le refroidir. La ventilation elle-même peut s'avérer coûteuse, s'il s'agit d'équipement de ventilation forcée.

Ces inconvénients sont résolus par l'invention : la récurrence de 3 événements de même type (ordre d'activation) le mardi matin conduit le procédé de commande à provoquer une activation anticipée des moyens motorisés de ventilation naturelle dès le lundi soir pour que l'air du local se trouve dans un état optimum avant le début de ladite réunion du mardi matin. Contrairement aux dispositifs de l'art antérieur, aucune intervention humaine n'est nécessaire pour fixer cette activation anticipée.

Ainsi, les trois premières activations sont le fait du contrôleur existant, avec émission d'ordres 41, tandis que la quatrième activation est le fait du dispositif de supervision, avec émission d'un ordre 45.

Alternativement, le procédé de commande peut agir par anticipation dès le troisième lundi soir, sans attendre la confirmation de la récurrence. Ou encore, le procédé peut activer par anticipation seulement une partie des moyens motorisés de ventilation naturelle quand il y en a plusieurs, ou peut tous les activer mais partiellement, tant qu'il n'y a pas eu confirmation de la récurrence.

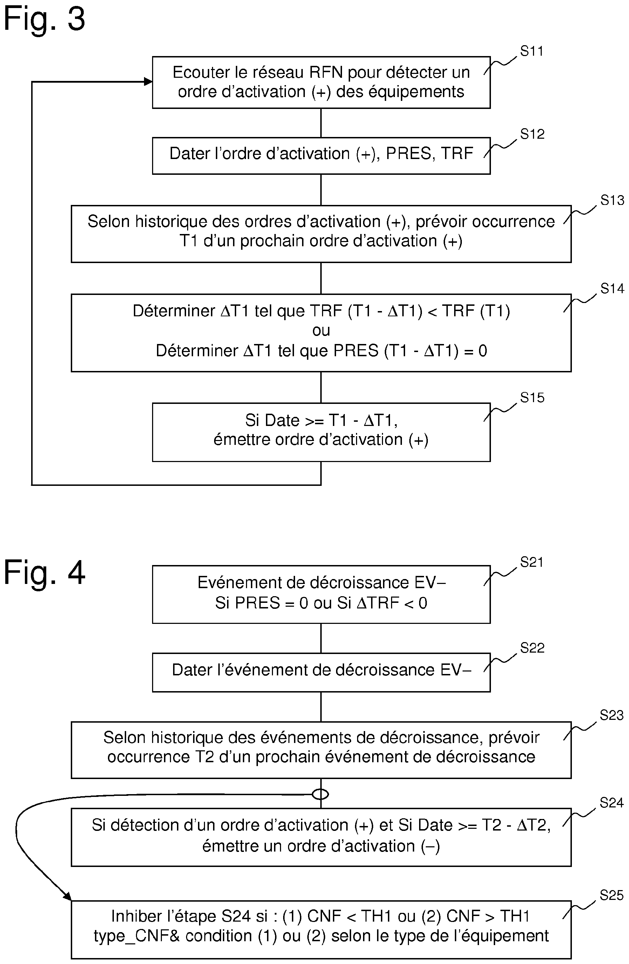

La figure 3 représente un mode d'exécution du procédé de commande, précisant ce qui vient d'être décrit.

Dans une première étape S11, le réseau est écouté pour détecter un ordre d'activation croissante, noté (+), émis par le contrôleur existant à destination des équipements. Alternativement, c'est un accusé de réception d'ordre d'activation croissante qui est détecté, ou encore l'activation de l'équipement est détectée autrement que via le réseau domotique, comme décrit plus haut.

Quand une activation croissante de l'équipement est détectée, dans une deuxième étape S12, il y a enregistrement dans la mémoire 52 d'une caractéristique temporelle de l'ordre d'activation croissante, à savoir la date et l'heure. On associe à cet enregistrement l'état courant du capteur de présence et de la tarification. Alternativement, on ne procède à l'enregistrement que si la tarification courante est élevée et/ou si le local est occupé au moment de l'ordre d'activation croissante.

Lors d'une troisième étape S13, le procédé de commande détermine une première date T1 d'une prochaine occurrence d'un ordre d'activation croissante, à partir de l'historique des ordres d'activation croissante passés, mémorisés dans la mémoire de données. Au cours de la troisième étape S13 est donc réalisée la prévision de l'occurrence d'un prochain ordre d'activation croissante, à partir de comparaisons effectuées sur les caractéristiques temporelles enregistrées dans la deuxième étape S12.

Lors d'une quatrième étape S14, le procédé de commande calcule un premier écart ΔT1 tel que la première date T1 avancée du premier écart ΔT1 donne une période dans laquelle la tarification est basse ou encore dans laquelle le local est inoccupé. Le premier écart ΔT1 doit être de plus suffisamment important pour que la tarification reste basse et/ou pour que le local reste inoccupé pendant la durée normale d'activation de l'équipement.

Lors d'une cinquième étape S15, le procédé de commande provoque l'activation anticipée du moyen motorisé de ventilation naturelle, à une date antérieure du premier écart ΔT1 à la première date T1.

Le procédé boucle ensuite sur la première étape.

Appliqué pour la première fois au cas de la figure 2, on constate que le procédé détecte bien l'activation du moyen motorisé de ventilation naturelle dans l'étape S11 : le premier mardi matin (D2), puis le deuxième mardi matin, puis le troisième mardi matin lors de l'émission d'ordres 41 par le contrôleur existant. Lors des passages dans l'étape S13 ayant lieu avant le troisième mardi, une corrélation des activations croissantes est encore incertaine mais elle devient confirmée lors du troisième ordre d'activation croissante, dans cette étape S13. D'où la prévision d'une prochaine occurrence le mardi matin suivant (date T1). Dans l'étape S14 suivant cette prévision, un premier écart ΔT1 est déterminé. Par exemple, ΔT1 = 10 heures.

Lors du passage dans l'étape S16 le lundi soir (date T1 - ΔT1) il y a alors activation du moyen motorisé de ventilation naturelle, bien que le taux d'oxyde de carbone mesuré à cette date soit nettement en dessous du seuil TH10 utilisé par le contrôleur existant.

Ainsi le procédé présente l'avantage de pouvoir être appliqué par un dispositif éventuellement installé sur un bâtiment existant et sans le moindre paramétrage : il est parfaitement inutile d'indiquer au dispositif de supervision des plages horaires ou périodes d'occupation du local puisque le dispositif de supervision apprend de lui-même à définir ces plages horaires par l'analyse du passé.

De plus, le procédé peut s'appliquer de la même façon à la détection d'ordres récurrents issus non pas du contrôleur existant mais de l'unité de commande distante. Le contrôleur existant 10 et l'unité de commande distante 30 constituent donc des moyens de contrôle auquel s'applique le procédé, le dispositif de supervision étant apte à détecter des ordres de commande issus de l'un ou issus de l'autre vers l'équipement domotique, à en enregistrer les caractéristiques temporelles et à prévoir l'occurrence d'un prochain ordre de commande à partir de ces caractéristiques temporelles.

La figure 4 représente des étapes additionnelles s'ajouant au procédé de commande tel que décrit ci-dessus pour former ainsi une première variante du mode d'exécution. Cette variante permet d'éviter l'activation du moyen de motorisé de ventilation naturelle quand on peut en faire l'économie.

Par exemple, un événement de croissance (lié à une réunion de service) peut se produire régulièrement le vendredi matin, alors qu'il est constaté une décroissance naturelle dès le vendredi après-midi, qui se prolonge tout le week-end. Il est alors préférable, en période de chauffage ou de climatisation du bâtiment, d'éviter d'activer une ventilation naturelle à une heure de pointe tarifaire, alors que le renouvellement naturel de l'air pendant le week-end permettra d'aborder la semaine suivante dans les meilleures conditions de qualité de l'air.

A cet effet, la première variante comprend une première étape S21 de définition d'un événement de décroissance EV- si le local devient inoccupé ou si on passe dans une période de faible tarification énergétique.

Dans une deuxième étape S22, l'événement de décroissance est daté à l'aide de l'horloge calendrier et mémorisé dans la mémoire de données. Dans une troisième étape S23, l'historique des événements de décroissance mémorisés dans la mémoire de données est utilisé pour prévoir une deuxième date T2 d'occurrence d'un prochain événement de décroissance. Au cours de la troisième étape S23 est donc réalisée la prévision de l'occurrence d'une prochaine évolution spécifique analogue, à partir de comparaisons effectuées sur les caractéristiques temporelles enregistrées dans la deuxième étape S22.

Dans une quatrième étape S24, la date courante est comparée à une date anticipant la deuxième date par décalage d'un deuxième écart ΔT2, par exemple égal à une heure ou à deux heures. Si la date courante est telle qu'un événement de décroissance se produit à une date prochaine (écart ΔT2), alors on annule une activation croissante du moyen motorisé de ventilation naturelle en cas d'émission d'un tel ordre par le contrôleur existant, en provoquant alors l'émission d'un ordre opposé d'activation décroissante.

Cette annulation doit couvrir au moins toute la plage temporelle ΔT2. Pour éviter une séquence bouclée d'ordres issus du contrôleur existant et de contre-ordres issus du dispositif de supervision, il suffit que ce dernier présente une plus forte priorité, si le réseau domotique gère les priorités.

Cependant, il est important que l'annulation par le dispositif de supervision d'un ordre émis par le contrôleur existant ne se fasse pas au détriment du confort des occupants du local. Ou, au moins, que ceux-ci en ressentent un minimum de gêne. A cet effet, il est prévu une cinquième étape S25 d'inhibition de la quatrième étape selon l'état courant d'un paramètre de confort CNF. Ce paramètre est comparé à un premier seuil TH1 et l'inhibition de la quatrième étape a lieu si l'écart entre le paramètre de confort TH1 et le paramètre de confort CNF est positif ou négatif, le signe dépendant du type d'équipement.

### Par exemple :

Si l'équipement est un moyen de chauffage le paramètre de confort est une mesure de température intérieure et l'inhibition de la quatrième étape a lieu quand la mesure de température intérieure passe en dessous du premier seuil. Dans ce premier cas, l'équipement est défini comme relevant de la condition (1).

Si l'équipement est un moyen de ventilation, le paramètre de confort est une mesure de qualité de l'air et l'inhibition de la quatrième étape a lieu quand la mesure de qualité de l'air dépasse le premier seuil.

Si l'équipement est un moyen de climatisation, le paramètre de confort est une mesure de température intérieure et l'inhibition de la quatrième étape a lieu quand la mesure de température intérieure dépasse le premier seuil. Dans ces deux derniers cas, les équipements sont définis comme relevant de la condition (2).

La cinquième étape peut s'intercaler entre la troisième et la quatrième étape, comme représenté par une flèche.

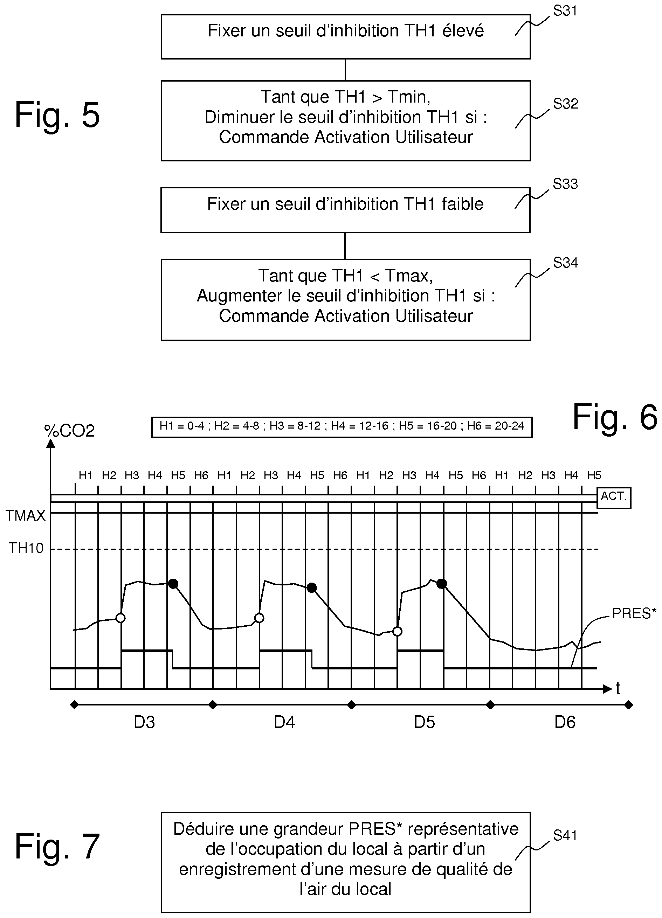

La figure 5 représente des étapes additionnelles s'ajoutant au procédé de commande tel que décrit en relation avec la figure 3 pour former ainsi une deuxième variante du mode d'exécution, dans laquelle le premier seuil TH1 de la première variante est avantageusement modifié selon les réactions de l'utilisateur, à partir d'une valeur initiale prédéfinie. La deuxième variante est représentée selon deux alternatives comprenant chacune deux étapes. Chaque alternative s'applique à des équipements relevant de la condition (1) ou relevant de la condition (2). Elle comprend une étape d'initialisation S31 ou S33 dans laquelle on fixe une valeur initiale pour le premier seuil TH1. Le procédé boucle ensuite sur une étape S32 ou S34 de modification du premier seuil si l'utilisateur réagit à un inconfort provoqué par l'action du dispositif de supervision.

Dans le cas des équipements relevant de la condition (1), le premier seuil est d'abord choisi élevé (étape S31). Le premier seuil est ensuite abaissé (étape S32) si on constate que, suite à une action du moyen de supervision (étape S24), l'utilisateur réagit en provoquant lui-même l'émission d'un ordre d'activation croissante du dispositif. Cette réaction de l'utilisateur est détectée par le dispositif de supervision en écoute du réseau domotique, comme représenté par la deuxième flèche 44.

Dans le cas des équipements relevant de la condition (2), le premier seuil est d'abord choisi faible (étape S32). Le premier seuil est ensuite abaissé (étape S34) si on constate que, suite à une action du moyen de supervision (étape S24), l'utilisateur réagit en provoquant lui-même l'émission d'un ordre d'activation croissante du dispositif.

La plage de variation du premier seuil est cependant bornée par deux limites des valeurs de seuil, respectivement Tmax et Tmin. Les augmentations ou diminutions du premier seuil ont lieu de façon incrémentale, par exemple chaque nuit à minuit. Le valeur des incréments est par exemple constante, ou est d'autant plus élevée qu'un grand nombre de réactions utilisateur a été constaté au cours de la journée. Alternativement, une période plus longue, par exemple trois jours voire une semaine, est prise pour chaque incrémentation/décrémentation.

La figure 6 représente un deuxième exemple d'évolution du taux de dioxyde de carbone %CO2 dans le local, avec application d'un procédé de détection de présence constituant une troisième variante du mode d'exécution. Dans cet exemple, le capteur de confort 58 est un capteur de qualité de l'air, par exemple un capteur de concentration en dioxyde de carbone. Il est utilisé comme capteur de présence, ou pour contribuer à la détection de présence. Un enregistrement des mesures issues du capteur est réalisé. L'échelle temporelle est plus dilatée que dans le cas de la figure 2 et s'étend sur 4 jours notés D3 à D6 (mercredi, jeudi, vendredi et samedi). Dans cet enregistrement, une journée est divisée en 6 plages de 4 heures : une première plage horaire H1 de 0 à 4 heures, une deuxième plage horaire H2 de 4 heures à 8 heures, une troisième plage horaire H3 de 8 heures à 12 heures, une quatrième plage horaire H4 de 12 heures à 16 heures, une cinquième plage horaire H5 de 16 heures à 20 heures et une sixième plage horaire H6 de 20 heures à 24 heures. On remarque sur cet enregistrement qu'à aucun moment la concentration en dioxyde de carbone n'atteint le seuil interne TH10 du contrôleur existant, puisque celui-ci n'est pas activé.

L'enregistrement (et l'analyse de ses variations) montre que le local est occupé de manière régulière de 8 heures à 17 heures environ le mercredi et le jeudi, mais que le départ des occupants est plus précoce le vendredi : 14 heures environ, voire 13 heures. Lors des croissances journalières du matin, la pente est plus élevée que lors des décroissances (le taux de variation présente des valeurs positives plus fortes que les valeurs négatives) ce qui s'explique par le fait que l'arrivée des occupants du local augmente plus vite la concentration en dioxyde de carbone que leur départ quand le renouvellement d'air se fait sans activation du moyen motorisé ou des moyens motorisés de ventilation naturelle. Des ronds blancs marquent les ruptures de pente analysables comme résultant de l'arrivée des utilisateurs du local, tandis que des ronds noirs marquent les ruptures de pente analysables comme résultant du départ des utilisateurs du local.

Le samedi D6, le local n'est pas occupé et le taux de dioxyde de carbone passe à son plus bas niveau.

Ainsi, l'analyse des taux de variation (dérivée temporelle) de la concentration en dioxyde de carbone (ou plus généralement) d'une mesure de qualité de l'air, permet de reconstituer une grandeur PIRES* représentative de l'occupation du local.

Le procédé peut alors avantageusement se substituer à une fourniture d'horaires ou à l'usage de capteurs de présence comme dans l'art antérieur. Il peut également être utilisé en combinaison avec de tels capteurs.

La figure 7 représente sous forme d'une étape unique le procédé de détection de présence pouvant s'ajouter au procédé de commande décrit en relation avec la figure 3 et former ainsi une troisième variante du procédé de commande, comme il vient d'être décrit en relation avec la figure 6.

Les différentes étapes du procédé de commande et de ses variantes peuvent être mises en oeuvre avec des moyens logiciels classiques, les déroulant de manière séquentielle et/ou en parallèle pour certaines. Un processus d'oubli est avantageusement ajouté au procédé afin de lui permettre de s'adapter à une modification profonde du comportement des utilisateurs.

Cependant il est préféré l'utilisation d'au moins un algorithme de type évolutionnaire pour la mise en oeuvre du procédé, la détermination d'une valeur optimale du premier seuil et/ou des valeurs optimales du premier écart ΔT1 et/ou du deuxième écart ΔT2, relatives à chaque type d'équipement et adaptées à chaque situation rencontrée.

Un tel algorithme permet de déterminer rapidement une solution optimale des paramètres d'une loi de commande du dispositif. L'algorithme évolutionnaire prend en compte les événements passés pour améliorer les paramètres de la loi de commande et comprend naturellement le processus d'oubli. De manière simplifiée, dans un algorithme génétique utilisé comme algorithme évolutionnaire, des « individus » sont caractérisés par un « patrimoine génétique » constitué par un état possible du système, c'est-à-dire une valeur arbitraire de chacune des variables citées ci-dessus. Les valeurs arbitraires sont choisies de manière à limiter le nombre total d'individus : la « population ». Un score, représentatif par exemple de la qualité de l'air ou du flux énergétique (ou de la consommation énergétique), ou de flux d'air est calculé pour chaque individu. Les individus de plus faible score ne passent pas la génération suivante. A la génération suivante, les individus éliminés sont remplacés par de nouveaux individus de patrimoine génétique modifié, par exemple de manière aléatoire (« mutation »). Alternativement, des croisements de type sexué ont lieu entre individus par échange de la moitié du patrimoine génétique. Le processus de calcul de score et de sélection recommence alors avec la nouvelle génération. L'algorithme évolutionnaire permet de converger rapidement vers un optimum (le patrimoine génétique donnant le meilleur score).

Ainsi, dans la version d'implantation préférée du procédé, celui-ci comprend une loi de commande sous forme d'un premier programme PRG1 de type classique dont la variable de sortie est la commande d'activation de l'équipement (ou dont les variables de sortie sont les commandes d'activation des équipements par le dispositif de supervision) et dont les variables d'entrée sont au moins l'état des ordres d'activation captés sur le réseau domotique par le dispositif de supervision, la première information de présence PRES issue du capteur de présence et/ou la deuxième information de présence PIRES* déduite de mesures de qualité de l'air, l'état de tarification énergétique TRF et enfin la date (jour et heure). Les variables d'entrée peuvent également comprendre la température intérieure et extérieure, une information météorologique (vitesse du vent, ensoleillement etc.). La loi de commande relie les variables de sortie aux variables d'entrée aux moyens de paramètres. Ces paramètres sont eux mêmes déterminés par un deuxième programme PRG2, de type évolutionnaire, permettant de déterminer la valeur optimale des paramètres en fonction de contraintes fixées par les seuils et en fonction de l'historique des ordres d'activation croissante et des événements de décroissance.

La combinaison des deux programmes permet d'obtenir les actions d'anticipation et/ou d'inhibition du procédé de commande.

De manière plus précise que l'information d'un simple capteur de présence, une mesure de qualité de l'air, par exemple du taux de dioxyde de carbone, est utilisée comme représentative de l'usage qui est fait du local. Cette mesure par le dispositif de supervision peut être réalisée de manière beaucoup plus précise que dans le cas d'un contrôleur existant.

Le dispositif de supervision intègre les moyens logiciels et matériels permettant d'appliquer le procédé de commande. Il permet notamment d'économiser l'énergie par anticipation ou annulation d'actions de contrôleurs d'une installation existante, sans perte de confort pour les occupants, voire même en augmentant le confort si le dispositif de supervision intègre des capteurs plus performants, et/ou des moyens d'information plus performants que les contrôleurs existants.

Alternativement, le dispositif de supervision peut se substituer à des contrôleurs existants sans avoir besoin de modifier ces derniers, simplement du fait d'un niveau de priorité plus élevé.

Enfin, le dispositif de supervision peut également être utilisé dans une installation neuve, sans contrôleurs existants, dont il gère directement les équipements.

## Revendications

1. Procédé de commande d'au moins un équipement domotique, relié à un moyen de contrôle (10) et à une unité de commande (30) distincte du moyen de contrôle (10), par un réseau domotique sur lequel sont adressés des ordres de commande vers l'équipement domotique, à l'aide d'un dispositif de supervision (50) relié au réseau domotique, **caractérisé en ce que** :
- le dispositif de supervision (50)
i. capte des ordres émis par le moyen de contrôle (10) vers l'au moins un équipement domotique (10),
ii. capte des ordres émis par l'unité de commande (30) vers l'au moins un équipement domotique (10), et
iii. émet des ordres de commande vers l'au moins un équipement domotique ;
- et **en ce que** le procédé comprend :
- une étape (S11) de détection, par le dispositif de supervision, d'un ordre d'activation croissante de l'équipement domotique émis par le moyen de contrôle,
- une étape (S12) d'enregistrement, par le dispositif de supervision, d'une caractéristique temporelle relative à l'ordre d'activation croissante,
- une étape (S13) de prévision, par le dispositif de supervision, de l'occurrence d'un prochain ordre d'activation croissante, à partir des caractéristiques temporelles enregistrées.

2. Procédé de commande selon la revendication 1 **caractérisé en ce que** l'équipement domotique est un moyen de ventilation, et/ou un moyen de chauffage, et/ou un moyen de climatisation, et/ou un moyen de protection solaire.

3. Procédé de commande selon l'une des revendications précédentes, **caractérisé en ce qu'**il comprend une étape (S15) d'émission, par le dispositif de supervision, d'un ordre d'activation croissante de l'équipement, avant l'occurrence d'un prochain ordre d'activation croissante, lorsque ce prochain ordre d'activation a lieu dans une période d'occupation du local et/ou dans une période de forte tarification énergétique.

4. Procédé de commande selon l'une des revendications précédentes, **caractérisé en ce qu'**il comprend une étape (S24) d'émission, par le dispositif de supervision, d'un ordre d'activation décroissante de l'équipement domotique, après la détection d'un ordre d'activation croissante émis par le moyen de contrôle, lorsque le moyen de contrôle est un contrôleur existant et lorsque cet ordre d'activation croissante a lieu avant une période d'inoccupation du local et/ou avant une période de faible tarification énergétique.

5. Procédé de commande selon l'une des revendications précédentes, **caractérisé en ce qu'**il comprend une étape (S25) d'inhibition dont la mise en oeuvre est dépendante de l'écart d'un paramètre de confort du local avec un premier seuil (TH1).

6. Procédé de commande selon la revendication 5, **caractérisé en ce que** le paramètre de confort est une mesure de qualité de l'air, l'étape d'inhibition ayant alors lieu quand la mesure de qualité de l'air dépasse le premier seuil et si l'équipement domotique est un moyen de ventilation.

7. Procédé de commande selon la revendication 5, **caractérisé en ce que** le paramètre de confort est une mesure de température intérieure, l'étape d'inhibition ayant alors lieu quand la mesure de température intérieure dépasse le premier seuil et si l'équipement domotique est un moyen de climatisation.

8. Procédé de commande selon la revendication 5, **caractérisé en ce que** le paramètre de confort est une mesure de température intérieure, l'étape d'inhibition ayant alors lieu quand la mesure de température intérieure passe en dessous du premier seuil et si l'équipement domotique est un moyen de chauffage.

9. Procédé de commande selon la revendication 5, **caractérisé en ce qu'**il comprend une étape d'évolution du premier seuil dont la mise en oeuvre est dépendante d'une détection d'une commande émise par un moyen de contrôle constitué par un moyen de commande manuel de l'équipement domotique.

10. Dispositif de supervision d'au moins un équipement domotique d'un local et comprenant au moins un premier capteur mesurant une qualité de l'air et disposé dans le local, une horloge-calendrier fournissant une heure et date courante, une mémoire apte à enregistrer et à dater des événements d'évolution spécifique de la mesure de qualité de l'air, **caractérisé en ce qu'**il comprend en outre des moyens matériels et logiciels mettant en oeuvre le procédé selon l'une quelconque des revendications 1 à 9.

11. Dispositif de supervision selon la revendication 10, **caractérisé en ce que** les moyens logiciels comprennent au moins un premier programme (PRG1) d'exécution d'une loi de commande comprenant des paramètres et un deuxième programme (PRG2) de type évolutionnaire pour la détermination desdits paramètres et leur optimisation au cours du fonctionnement du dispositif de supervision.

## Patentansprüche

1. Steuerungsverfahren mindestens einer haustechnischen Ausrüstung, die mit einem Kontrollmittel (10) und einer Steuereinheit (30), die sich vom Kontrollmittel (10) unterscheidet, mittels eines haustechnischen Netzwerks verbunden ist, über das Steuerbefehle an die haustechnische Ausrüstung geschickt werden, mit Hilfe einer Überwachungsvorrichtung (50), die mit dem haustechnischen Netzwerk verbunden ist, **dadurch gekennzeichnet, dass**:
- die Überwachungsvorrichtung (50)
i. Befehle, die von dem Kontrollmittel (10) an mindestens eine haustechnische Ausrüstung (10) geschickt werden, auffängt,
ii. Befehle, die von der Steuervorrichtung (30) an mindestens eine haustechnische Ausrüstung (10) geschickt werden, auffängt, und
iii. Steuerbefehle an mindestens eine haustechnische Ausrüstung sendet,
- und dass das Verfahren umfasst:
- einen Detektionsschritt (S11) der Überwachungsvorrichtung eines zunehmenden Aktivierungsbefehls der haustechnischen Ausrüstung, gesendet von dem Kontrollmittel,
- eine Registrierungsschritt (S12) der Überwachungsvorrichtung eines Zeitmerkmals in Bezug zum zunehmenden Aktivierungsbefehl,
- einen Vorhersageschritt (S13) der Überwachungsvorrichtung über das Vorliegen eines nächsten zunehmenden Aktivierungsbefehls auf der Basis registrierter Zeitmerkmale.

2. Steuerungsverfahren nach Anspruch 1, **dadurch gekennzeichnet, dass** die haustechnische Ausrüstung ein Belüftungsmittel und/oder ein Heizmittel und/oder ein Klimatisierungsmittel und/oder ein Sonnenschutzmittel ist.

3. Steuerungsverfahren nach einem der vorangehenden Ansprüche, **dadurch gekennzeichnet, dass** es einen Sendeschritt (S15) der Überwachungsvorrichtung eines zunehmenden Aktivierungsbefehls der Ausrüstung vor dem Vorliegen eines nächsten zunehmenden Aktivierungsbefehls umfasst, wenn dieser nächste Aktivierungsbefehl während eines Belegungszeitraums des Raums und/oder während eines Zeitraums mit einem hohen Energietarifs stattfindet.

4. Steuerungsverfahren nach einem der vorangehenden Ansprüche, **dadurch gekennzeichnet, dass** es einen Sendeschritt (S24) der Überwachungsvorrichtung eines abnehmenden Aktivierungsbefehls der haustechnischen Ausrüstung nach der Detektion eines zunehmenden Aktivierungsbefehls, gesendet von dem Kontrollmittel, umfasst, wenn das Kontrollmittel ein vorhandener Controller ist und wenn dieser zunehmende Aktivierungsbefehl vor einem Nichtbelegungszeitraum des Raums und/oder vor einem Zeitraum mit einem niedrigen Energietarif stattfindet.

5. Steuerungsverfahren nach einem der vorangehenden Ansprüche, **dadurch gekennzeichnet, dass** es eine Hemmungsschritt (S25) umfasst, dessen Umsetzung von der Abweichung eines Komfortparameters des Raums von einem ersten Grenzwert (TH1) abhängt.

6. Steuerungsverfahren nach Anspruch 5, **dadurch gekennzeichnet, dass** der Komfortparameter eine Messung der Luftqualität ist, wobei der Hemmungsschritt dann stattfindet, wenn die Messung der Luftqualität den ersten Grenzwert überschreitet und wenn die haustechnische Ausrüstung ein Belüftungsmittel ist.

7. Steuerungsverfahren nach Anspruch 5, **dadurch gekennzeichnet, dass** der Komfortparameter eine Messung der Innentemperatur ist, wobei der Hemmungsschritt dann stattfindet, wenn die Messung der Innentemperatur den ersten Grenzwert überschreitet und wenn die haustechnische Ausrüstung ein Klimatisierungsmittel ist.

8. Steuerungsverfahren nach Anspruch 5, **dadurch gekennzeichnet, dass** der Komfortparameter eine Messung der Innentemperatur ist, wobei der Hemmungsschritt dann stattfindet, wenn die Messung der Innentemperatur unter den ersten Grenzwert fällt und wenn die haustechnische Ausrüstung ein Heizmittel ist.

9. Steuerungsverfahren nach Anspruch 5, **dadurch gekennzeichnet, dass** es einen Entwicklungsschritt des ersten Grenzwerts umfasst, dessen Umsetzung von der Detektion eines Befehls, gesendet von einem Kontrollmittel, gebildet von einem manuellen Steuermittel der haustechnischen Ausrüstung, abhängt.

10. Überwachungsvorrichtung mindestens einer haustechnischen Ausrüstung eines Raums und umfassend mindestens einen ersten Sensor, der eine Luftqualität misst und in dem Raum angeordnet ist, eine Kalenderuhr, die eine Uhrzeit und das aktuelle Datum liefert, einen Speicher, der imstande ist, spezielle Entwicklungsereignisse der Messung der Luftqualität zu registrieren und zu datieren, **dadurch gekennzeichnet, dass** sie ferner Soft- und Hardwaremittel umfasst, die das Verfahren nach einem der Ansprüche 1 bis 9 umsetzen.

11. Überwachungsvorrichtung nach Anspruch 10, **dadurch gekennzeichnet, dass** die Softwaremittel mindestens ein erstes Ausführungsprogramm (PRG1) eines Steuergesetzes, das Parameter umfasst, und ein zweites evolutionäres Programm (PRG2) für die Bestimmung der Parameter und ihre Optimierung während des Betriebs der Überwachungsvorrichtung umfassen.

## Claims

1. Method for controlling at least one piece of home automation equipment, connected to a control means (10) and to a control unit (30) distinct from the control means (10), through a home automation network over which are sent control orders to the home automation equipment, by means of a supervision device (50) connected to the home automation network, **characterized in that** :
- The supervision device (50)
i) receives orders provided by the control means (10) toward the at least one home automation equipment,
ii) receives orders provided by the control unit (30) to the at least one home automation equipment, and
iii) emits control orders to the at least one home automated element;
and **in that** the method comprises:
- a step (S11) for detecting with the supervision device, an order of an increasing activation of the home automation equipment, transmitted by the control means,
- a step (S12) for recording with the supervision device, time characteristics related to the increasing activation order,
- a step (S13) for predicting with the supervision device, the occurrence of a next increasing activation order, from recorded time characteristics.

2. The control method according to claim 1, **characterized in that** the piece of home automation equipment is a ventilation means, and/or a heating means, and/or an air-conditioning means, and/or a solar protection means.

3. The control method according to one of the preceding claims, **characterized in that** it comprises a step (S15) for transmitting, with the supervision device, an order of increasing activation of the equipment, before the occurrence of a next increasing activation order, when said next activation instruction occurs in a period of occupation of the room, and/or in a period of high energy price.

4. The control method according to one of the preceding claims, **characterized in that** it comprises a step (S24) for transmitting, with the supervision device, an instruction of decreasing activation of the home automation equipment, after the detection of an increasing activation order transmitted by the control means, when the control means is an existing controller and when said of increasing activation order occurs before a period of vacancy of the room and/or before a period of low energy pricing.

5. The control method according to one of the preceding claims, **characterized in that** it comprises an inhibition step (S25) the application of which depends on the difference of a comfort parameter of the room with a first threshold value (TH1).

6. The control method according to claim 5, **characterized in that** the comfort parameter is a measurement of the quality of the air, the inhibition step then occurring when the measurement of the quality of the air exceeds the first threshold value and if the piece of home automation equipment is a ventilation means.

7. The control method according to claim 5, **characterized in that** the comfort parameter is a measurement of indoor temperature, the inhibiting step then occurring when the measurement of the indoor temperature exceeds the first threshold value and if the piece of home automation equipment is an air-conditioning means.

8. The control method according to claim 5, **characterized in that** the comfort parameter is a measurement of the indoor temperature, the inhibiting step then occurring when the indoor temperature passes below the first threshold value and if the piece of home automation equipment is a heating means.

9. The control method according to claim 5, **characterized in that** in comprises a step for development of the first threshold, the application of which depends on detection of a command transmitted by a control means formed by manual control means of the piece of home automation equipment.

10. A device for supervising at least one piece of home automation equipment of a room and comprising at least a first sensor measuring the quality of the air and positioned in the room, a calendar-clock providing current time and date, a memory able to record and date specific development events of the measurement of the air quality, **characterized in that** it further comprises hardware and software means applying the method according to any of claims 1 to 9.

11. The Supervision device according to claim 10, **characterized in that** the software means comprise at least a first program (PRG1) for executing a control law, comprising parameters and a second program (PRG2) of the evolutionary type for determining said parameters and their optimization during the operation of the supervision device.
